# EUROPÄISCHE PATENTSCHRIFT

(11) **EP 4 174 446 B1**
(45) Veröffentlichungstag und Bekanntmachung des Hinweises auf die Patenterteilung: **29.11.2023**
(21) Anmeldenummer: 22188543.7
(22) Anmeldetag: 03.08.2022
(51) Int. Cl.: G01D 5/244

(54) **GEBERVORRICHTUNG UND VERFAHREN ZUR BESTIMMUNG EINER ABSOLUTPOSITION**
TRANSDUCER DEVICE AND METHOD FOR DETERMINING AN ABSOLUTE POSITION
DISPOSITIF DÉTECTEUR ET PROCÉDÉ DE DÉTERMINATION D'UNE POSITION ABSOLUE

(30) Priorität: 29.10.2021 DE 102021128219
(43) Veröffentlichungstag der Anmeldung: 03.05.2023
(73) Patentinhaber: SICK AG, 79183 Waldkirch (DE)
(72) Erfinder: Hopp, David, 78166 Donaueschingen (DE); Francescon, Massimo, 10132 Torino (IT)

(56) Entgegenhaltungen:
- EP-B1- 2 274 579
- DE-C1- 4 309 863
- DE-U1-202019 101 115

## Beschreibung

Die Erfindung betrifft eine Gebervorrichtung und ein Verfahren zur Bestimmung einer Absolutposition nach dem Oberbegriff von Anspruch 1 beziehungsweise 12.

Bei Gebervorrichtungen werden lineare und rotatorische Systeme unterschieden. Ein Lineargeber bestimmt eine Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Ein wichtiges Anwendungsfeld sind sogenannte Motor-Feedback-Systeme, wo der Drehgeber in einem Servomotor die Ist-Drehzahl an die Regelung rückmeldet.

Für die zugrundeliegenden Sensorprinzipien werden verschiedene Technologien eingesetzt. Für Durchlicht bei Transmissionsanordnung eines Lichtsenders und eines Abtastsensors sind optisch transparente und nichttransparente Bereiche beziehungsweise für Auflicht bei Reflexionsanordnung von Lichtsender und Abtastsensor reflektierende und absorbierende Bereiche vorgesehen. Diese Bereiche oder Codeelemente können Öffnungen, reflexive und diffraktive Strukturen, Prismen, in Durchlässigkeit, Reflexivität, Grauton oder Farbe variierende Strukturen und sonstige optisch unterscheidbare Elemente sein. Zusammen ergeben die Codeelemente eine Codespur oder Maßspur. Magnetische Gebervorrichtungen detektieren beispielsweise mit einem Hall-Sensor entsprechende magnetische Strukturen beziehungsweise codierende Permanentmagneten. Es sind weitere physikalische Wirkprinzipien für Positionsmessungen geeignet, beispielhaft genannt seien noch kapazitive und induktive Gebervorrichtungen. Im Folgenden wird immer wieder das Beispiel einer optischen Abtastung herangezogen, ohne damit die alternativen Technologien auszuschließen.

Für die Bestimmung von Absolutpositionen gibt es eine Reihe von geeigneten Codierungen, wie Gray-Codes, nach dem Prinzip des Nonius' gegeneinander versetzte Codespuren oder Pseudozufallscodes. Insbesondere Pseudozufallscodes ermöglichen es, eine Absolutposition aus einer einzigen Maßspur zu erzeugen. Um das von dem Code erzeugte Licht- und Schattenmuster zu erfassen, sind Photodioden in Messrichtung in einer Reihe angeordnet, so dass sie jeweils ein Codeelement erfassen. Es wird grundsätzlich eine Anzahl Photodioden benötigt, die der Anzahl der für ein Codewort zu lesenden Codeelemente entspricht. Das allerdings führt zu Problemen, da die Photodioden im Betrieb nicht immer auf ein Codeelement ausgerichtet sind und es je nach Relativposition zwischen Code und Photodioden zu einer teilweisen, beispielsweise hälftigen Erfassung und damit undefinierten erfassten Zuständen kommt. Das führt im Gegensatz zum Anspruch einer Absolutpositionsbestimmung, das Codewort jederzeit eindeutig bestimmen zu können, zu mehrdeutigen Decodierungen.

Ein herkömmlicher Ausweg besteht darin, die doppelte Anzahl Photodioden in zwei in Messrichtung um beispielsweise eine halbe Länge eines Codeelements zueinander versetzten Reihen als Kanal A und B zu verwenden. In jeder Relativposition gibt es dann einen Kanal, der von der ungünstigen teilweisen Beleuchtung nicht oder kaum betroffen ist und damit eindeutige Bits des Codes erfasst. Es wird dann im Takt einer Relativbewegung einer halben Länge eines Codeelements zwischen den beiden Kanälen A und B hin und her geschaltet. Dafür bedarf es der Schaltzeitpunkte beziehungsweise der Information, welcher Kanal oder Satz von Photodioden jeweils für die aktuelle Positionsbestimmung ausgewählt wird. Üblicherweise wird dafür eine zusätzliche Inkrementalspur oder ein eigens zu diesem Zweck hinzugefügter Satz Photodioden verwendet. Dieser Auswahlprozess wird auch als Synchronisation zwischen inkrementaler und absoluter Positionsbestimmung bezeichnet.

Bei einem Fehler in dieser Synchronisation oder Auswahl des jeweils passend ausgerichteten Satzes von Photodioden wird unter Umständen der falsche Kanal aktiviert und damit der Absolutcode nicht immer eindeutig und folglich bisweilen falsch gelesen. Bei einem Zufallscode ergeben sich daraus undefinierte Sprünge zu einem im schlechtesten Fall weit entfernten Codewort und somit ein potentiell sehr großer Fehler der Absolutposition. Welche mechanischen Toleranzen eine entsprechende Gebervorrichtung verträgt, hängt somit maßgeblich von der korrekten Kanalwahl ab. Selbst bei präziser mechanischer Ausrichtung treten weitere elektronische Einflussgrößen hinzu, die die Kanalwahl nochmals verfälschen können, wie Rauschen, die Schwellbewertung für das Umschaltsignal zwischen den Kanälen, Schwankungen der Beleuchtung, Latenzen bei höheren Bewegungs- oder Drehgeschwindigkeiten und dergleichen.

In der DE 20 2019 101 115 U1 wird eine Vorrichtung zur Positions-, Längen- oder Winkelbestimmung vorgestellt, die für jedes Codeelement mehr als zwei Auslesebereiche oder Photodioden vorsieht. Dadurch wird eine Überabtastung geschaffen, mit der das Codewort unabhängig von der jeweiligen Phasenlage, also der Relativlage von Photodioden und Codeelementen, sicher erkannt werden kann. Die zusätzlichen Photodioden für die Überabtastung erhöhen jedoch die Komplexität der Vorrichtung.

Die noch unveröffentlichte deutsche Patentanmeldung mit dem Aktenzeichen 102021110583.8 verschiebt die Binarisierungsschwelle, mit der beurteilt wird, ob ein Codeelement eine binäre Null oder Eins codiert. Dadurch verändert sich die Länge der Segmente aufeinanderfolgender Nullen und Einsen, und dies ermöglicht auch bei nur zwei Abtastungen je Codeelement die Rekonstruktion des Codewortes ohne Umschaltung zwischen Kanälen in jeder Ausrichtung zwischen Abtastung und Codeelementen. Allerdings ist dafür neben der Wahl von Binarisierungsschwellen auch eine angepasste Auswertung erforderlich, und dies ist aus Perspektive des herkömmlichen Vorgehens ungewohnt.

Es ist daher Aufgabe der Erfindung, die Bestimmung einer Absolutposition zu verbessern.

Diese Aufgabe wird durch eine Gebervorrichtung und ein Verfahren zur Bestimmung einer Absolutposition eines ersten Objekts relativ zu einem zweiten Objekt nach Anspruch 1 beziehungsweise 12 gelöst. Die beiden Objekte sind gegeneinander in einer Längs- oder Drehrichtung beweglich, und die entsprechende Position oder Winkelstellung soll gemessen werden. Dabei sind erstes Objekt und zweites Objekt untereinander austauschbare Begriffe. Die Gebervorrichtung wird im Falle einer Linearbewegung auch als Lineargeber, im Falle einer Rotationsbewegung als Drehgeber, Drehwinkelsensor oder Encoder, bei Einsatz in einem Servomotor insbesondere als Motorfeedback-System bezeichnet, und das erste Objekt ist dann vorzugsweise eine Welle und das zweite Objekt ein stationärer Teil oder Gehäuse des Drehgebers. Aus der Position oder Winkelposition können abgeleitete Größen erzeugt werden, wie eine Geschwindigkeit oder Winkelgeschwindigkeit.

Mit dem ersten Objekt ist eine Maßverkörperung mit einer langgestreckten oder kreisförmigen Absolutcodespur verbunden, d.h. einer Maßspur oder Codespur mit einer Absolutcodierung aus einer Vielzahl von aneinander gereihten Codeelementen. Mit dem zweiten Objekt ist eine Abtasteinrichtung mit mindestens einem ersten und einem zweiten Empfänger verbunden. Die Empfänger tasten jeweils die Absolutcodespur ab. Sie sind längs der Absolutcodespur gegeneinander um einen Bruchteil der Ausdehnung eines Codeelements in Längs- oder Umfangsrichtung der Absolutcodespur versetzt angeordnet, es eilt damit gleichsam einer der Empfänger dem anderen voraus, und die beiden Empfänger erfassen die Codeelemente redundant mit einem Phasenversatz. Jeder Empfänger weist eine Vielzahl von Einzelempfangselementen auf, beispielsweise n=16 Einzelempfangselemente zur Erfassung eines 16-elementigen Codeworts. Vorzugsweise besteht eine 1:1-Beziehung zwischen Einzelempfangselementen eines Empfängers und zu erfassenden Codeelementen. Die Vielzahl n ist viel geringer als diejenige der Codeelemente der Absolutcodespur, da jede der aufzulösenden Absolutpositionen durch eine jeweilige Gruppe von n Codeelementen codiert wird.

Eine Steuer- und Auswertungseinheit wählt für die jeweilige Bestimmung einer Absolutposition den günstiger zu der Absolutcodespur ausgerichteten Empfänger aus. Die Einzelempfangselemente des ausgewählten Empfängers sollen ein einziges Codeelement möglichst mittig und nicht die Kante zwischen zwei benachbarten Codeelementen erfassen. Aus den Abtastsignalen der Einzelempfänger des ausgewählten Empfängers rekonstruiert die Steuer- und Auswertungseinheit ein Codewort und bestimmt damit die Absolutposition. Die Steuer- und Auswertungseinheit umfasst beispielsweise eine oder mehrere Schaltungen beziehungsweise einen oder mehrere digitale Rechenbausteine, wie mindestens einen Mikroprozessor, FPGA (Field Programmable Gate Array) oder ASIC (Application-Specific Integrated Circuit).

Die Erfindung geht von dem Grundgedanken aus, dass es einfacher ist, zunächst den ungünstigen Empfänger und so nach dem Ausschlussprinzip den günstigen Empfänger als den anderen Empfänger aufzufinden. In dem ungünstigen Empfänger sind die Einzelempfangselemente im Betrachtungszeitpunkt eher zu einer Kante zwischen Codeelementen, die dazu versetzten Einzelempfangselemente des anderen, günstigen Empfängers daher eher mittig auf jeweils ein einziges Codeelement ausgerichtet. Die Nähe der Ausrichtung zu einer Kante wiederum lässt sich daran erkennen, dass ein Einzelempfangselement eine Veränderung gegenüber einer vorhergehenden Bestimmung der Absolutposition erfährt, anschaulich bei optischer Erfassung einen Hell-Dunkel-Übergang oder umgekehrt einen Dunkel-Hell-Übergang. Da die Einzelempfangselemente vorzugsweise untereinander gerade denselben Abstand aufweisen wie die Codeelemente, sind in der Regel mehrere Einzelempfangselemente zugleich von einem Übergang betroffen. Diese gehören jedoch zum selben Empfänger und führen somit zur selben Auswahl des ungünstigen und damit günstigen Empfängers. Die Steuer- und Auswertungseinheit bestimmt daher das Einzelempfangselement oder die Einzelempfangselemente, mit denen im Vergleich zur vorhergehenden Bestimmung der Absolutposition ein anderes Codeelement erfasst wird, wo also ein Übergang von einem Codeelement zu einem anderen Codeelement stattgefunden hat und das somit eher in Gefahr ist, momentan zu einer Kante zwischen zwei Codeelementen ausgerichtet zu sein. Für die Auswahl des ungünstigen und letztlich günstigen Empfängers ist nicht die genaue Identität eines solchen Einzelempfangselements entscheidend, sondern nur, zu welchem der beiden Empfänger es gehört. Der andere Empfänger ist dann der günstige Empfänger und damit derjenige, dessen Abtastsignale für die aktuelle Positionsbestimmung verwendet werden. Vorzugsweise bleibt es bei der bestehenden Auswahl des günstigen Empfängers, wenn gegenüber der vorhergehenden Bestimmung der Absolutposition kein Einzelempfangselement ein anderes Codeelement erfasst.

Die Erfindung hat den Vorteil, dass eine präzise Bestimmung einer Absolutposition möglich ist, die nicht auf die herkömmliche zusätzliche Bestimmung von Umschaltzeitpunkten oder Synchronisation zwischen inkrementeller und absoluter Positionsbestimmung angewiesen ist. Die Absolutpositionsbestimmung ist in diesem Sinne autark, da allein Informationen der Absolutcodierung und der zugehörigen Abtasteinrichtung genügen. Dies gilt zumindest nach einer Initialphase, die im Folgenden noch diskutiert wird. Insbesondere wird keine Inkrementalcodespur benötigt oder verwendet, wobei natürlich trotzdem eine Inkrementalspur vorhanden sein darf, beispielsweise um die Genauigkeit der Positionsbestimmung durch eine zusätzliche inkrementale Positionsbestimmung zu verbessern. Es werden dadurch maximale Reserven für mechanische Toleranzen und elektronische Einflüsse geschaffen.

Die beiden Empfänger sind vorzugsweise um eine halbe Ausdehnung eines Codeelements zueinander versetzt angeordnet. Der Bruchteil des gegenseitigen Versatzes wird somit zu 1/2 gewählt. Ist der eine Empfänger mit seinen Einzelempfangselementen auf eine Kante zwischen zwei Codeelementen ausgerichtet, so ist der andere Empfänger gerade um ein halbes Codeelement dazu versetzt, so dass dessen Einzelempfangselemente die zugehörigen Codeelemente mittig erfassen. Für den Fall, dass mehr als zwei Empfänger vorgesehen sind, wird vorzugsweise ein anderer Bruchteil gewählt, insbesondere der Kehrwert der Anzahl Empfänger.

Die Gebervorrichtung weist bevorzugt mindestens eine Synchronisationsmarkierung, insbesondere eine zusätzliche inkrementale Codierung, und/oder mindestens einen Synchronisationsempfänger auf, mit deren Hilfe die Steuer- und Auswertungseinheit den günstiger zu der Absolutcodespur ausgerichteten Empfänger auswählen kann. Eine Gebervorrichtung nach dieser Ausführungsform ist zusätzlich mit den einleitend diskutierten herkömmlichen Mitteln für das Auffinden von Umschaltzeitpunkten zwischen den beiden Empfängern beziehungsweise eine Synchronisation zwischen inkrementaler und absoluter Positionserfassung ausgerüstet. Die erfindungsgemäße Absolutpositionsbestimmung ist autark und benötigt diese zusätzlichen Mittel nicht. In bestimmten Phasen, insbesondere einer Anfangsphase, oder für Zusatzfunktionen kann dies aber nützlich sein.

Die Steuer- und Auswertungseinheit ist bevorzugt dafür ausgebildet, den günstiger zu der Absolutcodespur ausgerichteten Empfänger in einer Anfangsphase mit Hilfe der Synchronisationsmarkierung und/oder des Synchronisationsempfängers auszuwählen. In einer Anfangsphase beziehungsweise beim Einschalten steht der Steuer- und Auswertungseinheit noch keine oder keine verlässliche frühere Absolutposition zur Verfügung, mit der verglichen werden könnte, um den jüngsten Wechsel einer Erfassung eines Codeelements und damit letztlich den günstigeren Empfänger allein aus der Absolutcodespur heraus zu finden. Daher kann in dieser bevorzugten Ausführungsform anfangs auf die auch herkömmlich verwendeten zusätzlichen Mittel zur Synchronisation zurückgegriffen werden.

Die Steuer- und Auswertungseinheit ist bevorzugt dafür ausgebildet, für eine zweikanalige Auswertung den günstiger zu der Absolutcodespur ausgerichteten Empfänger zusätzlich mit Hilfe der Synchronisationsmarkierung und/oder des Synchronisationsempfängers auszuwählen. In dieser bevorzugten Ausführungsform werden die auch herkömmlich verwendeten zusätzlichen Mittel zur Synchronisation nach der Anfangsphase weiterhin herangezogen. Es finden zwei Auswertungen statt, einmal mit den Abtastsignalen der Einzelempfangselemente nach erfindungsgemäßer Auswahl des günstigen Empfängers und ein weiteres Mal mit den Abtastsignalen der Einzelempfangselemente nach Auswahl des günstigen Empfängers mit Hilfe der Synchronisationsmarkierung und/oder des Synchronisationsempfängers. Häufig wird dies zweimal dieselbe Auswahl sein. Wenn aber beispielsweise die herkömmliche Synchronisation beziehungsweise die damit durchgeführte Absolutpositionsbestimmung scheitert, so steht über die erfindungsgemäße Auswahl ein zweiter Kanal zur Verfügung, der einspringen kann. Denkbar ist auch, eine Unzuverlässigkeit der aktuellen Absolutposition bei einer Uneinigkeit der Auswahl oder der Ergebnisse in den beiden Kanälen festzustellen oder die Ergebnisse miteinander zu verrechnen. Die Erfindung ermöglicht folglich lediglich mit sehr kostengünstig zu implementierenden Auswertungsschritten eine Aufrüstung zu einem zweikanaligen System, das besonders im Bereich der funktionalen Sicherheit von Interesse ist. Es sind zusätzliche Plausibilitätstests möglich, die die Reihenfolge untersuchen, mit denen Einzelempfangselemente Übergänge zwischen Codeelementen registrieren.

Die Steuer- und Auswertungseinheit ist bevorzugt dafür ausgebildet, die Feststellung, in welchem Empfänger ein Einzelempfangselement ein anderes Codeelement abtastet als bei einer vorhergehenden Bestimmung der Absolutposition, durch Vergleich der Codeworte der vorhergehenden und der aktuellen Bestimmung der Absolutposition zu treffen. Prinzipiell ließe sich das auf verschiedensten Ebenen feststellen, etwa durch Auswertung der Abtastsignale. Ein Vergleich der Codeworte ist jedoch besonders kompakt und einfach zu realisieren.

Der Vergleich weist bevorzugt eine Exklusiv-Oder-Verknüpfung auf. Damit genügt eine äußerst einfache logische Operation, um diejenigen Codebits aufzufinden, die sich geändert haben, und damit auch diejenigen Einzelempfangselemente, die nun im Vergleich zur vorhergehenden Bestimmung der Absolutposition ein anderes Codeelement erfassen.

Vorzugsweise ist der Empfänger, der in einer Bewegungsrichtung einer Bewegung zwischen erstem Objekt und zweitem Objekt vorne angeordnet ist, als ungerader Empfänger und der andere Empfänger als gerader Empfänger bezeichnet, und die Einzelempfänger sind gemäß ihrer Lage in Bewegungsrichtung von 0... n durchnummeriert, und die Steuer- und Auswertungseinheit ist dafür ausgebildet, den ungeraden Empfänger auszuwählen, wenn ein i-tes Einzelempfangselement, das ein anderes Codeelement abtastet als bei einer vorhergehenden Bestimmung der Absolutposition, eine gerade Nummer i trägt, und umgekehrt den geraden Empfänger auszuwählen, wenn das i-te Einzelempfangselement eine ungerade Nummer i trägt. Mit diesen Definitionen und Begriffen wird eine sehr einfache Zuordnung zwischen der Position der veränderten Codebits und dem günstigen Empfänger angegeben. Für das System sind natürlich die Bezeichnungen gerade und ungerade belanglos und austauschbar, solange die Zuordnung erhalten bleibt, sie vereinfachen aber das Verständnis. Ebenso austauschbar ist die Beziehung zwischen erstem und zweitem Empfänger einerseits und geradem und ungeradem Empfänger andererseits, erster und zweiter Empfänger sind bislang ohnehin nur Namen ohne Implikation besonderer Eigenschaften. Es kann daher beliebig der erste Empfänger als der gerade Empfänger und der zweite Empfänger als der ungerade Empfänger festgelegt werden oder umgekehrt.

Die beiden Empfänger sind bevorzugt in einer einzigen alternierenden Reihenanordnung von Einzelempfangselementen zusammengefasst. Jedes Einzelempfangselement erstreckt sich dann nur über höchstens die halbe Ausdehnung eines Codeelements, so dass zwei Einzelempfangselemente, je ein Einzelempfangselement beider Empfänger, bei entsprechender Ausrichtung gemeinsam ein Codeelement erfassen könnten. Konstruktiv oder hardwareseitig sind die beiden Empfänger ein Bauteil, was den Aufbau und die Verschaltung vereinfachen kann, konzeptionell bilden die Gruppen alternierender Einzelempfangselemente weiterhin zwei Empfänger. In einer alternativen Ausführungsform bilden die beiden Empfänger separate Reihenanordnungen, wobei sich dann die Einzelempfangselemente über die gesamte Ausdehnung eines Codeelements erstrecken können, aber nicht müssen.

Die Gebervorrichtung ist bevorzugt als optische Gebervorrichtung ausgebildet, die einen Lichtsender zum Anleuchten oder Durchleuchten der Absolutcodespur aufweist, wobei die Absolutcodespur reflektierende und nicht reflektierende oder lichtdurchlässige und nicht lichtdurchlässige Codeelemente umfasst und die Einzelempfangselemente als Photodioden ausgebildet sind. Eine optische Bestimmung der Absolutposition ist besonders verbreitet und geeignet, und sie ist in Transmission und Reflexion möglich. Die Empfänger sind dann als eine gemeinsame oder zwei separate Photodiodenzeilen realisiert.

Die Absolutcodespur weist bevorzugt einen binären Absolutcode auf. Binäre Codeelemente sind besonders einfach und verlässlich erfassbar. Im optischen Fall ist lediglich hell und dunkel zu unterscheiden, bei anderen Technologien gibt es analoge bipolare Zustände. Es sind alternativ mehrwertige oder q-näre Codierungen mit q>2 vorstellbar. Dann funktioniert ein einfacher XOR-Vergleich des aktuellen und des vorhergehenden Codewortes nicht mehr, aber dies kann durch einen numerischen Vergleich oder eine Kombination mehrerer logischer Verknüpfungen ersetzt werden.

Die Absolutcodespur weist bevorzugt einen Pseudozufallscode auf. Das ist sehr gut geeignet, um mit versetzt erfassten Codeworten eine große Anzahl Absolutpositionen zu codieren. Besonders bevorzugt ist der Pseudozufallscode binär. Andere Codierungen wie ein Graycode sind aber auch vorstellbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Drehgebers;
- Fig. 2: eine schematische Darstellung der jeweiligen Auswahl eines Empfängers für eine aktuelle Bestimmung der Absolutposition;
- Fig. 3: eine beispielhafte Darstellung der Abtastung eines Absolutcodes in einem Anfangszustand mit zwei Empfängern, die als gerader Empfänger und ungerader Empfänger bezeichnet sind;
- Fig. 4a: eine beispielhafte Darstellung der Abtastung des Absolutcodes gemäß Figur 3 in einer Situation, in der die Abtastsignale des ungeraden Empfängers für die Bestimmung der Absolutposition ausgewählt werden;
- Fig. 4b: eine beispielhafte Darstellung ähnlich Figur 4a in einer komplementären Situation, in der die Abtastsignale des geraden Empfängers für die Bestimmung der Absolutposition ausgewählt werden;
- Fig. 5a: ein beispielhafter XOR-Vergleich in der Situation der Figur 4a, mit dem der ungerade Empfänger ausgewählt wird; und
- Fig. 5b: ein beispielhafter XOR-Vergleich in der Situation der Figur 4b, mit dem der gerade Empfänger ausgewählt wird.

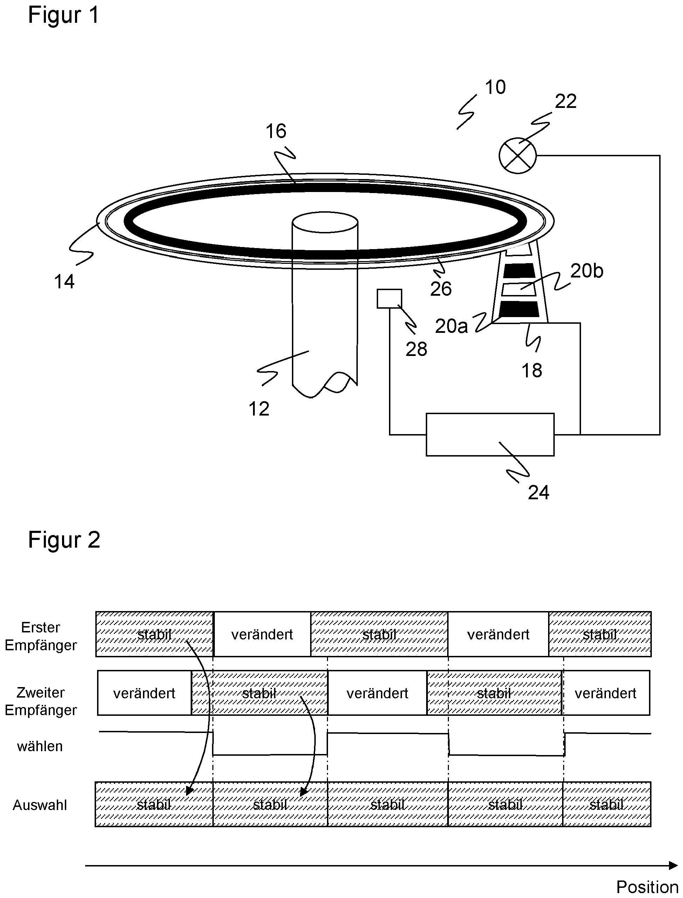

Figur 1 zeigt eine schematische Darstellung einer Gebervorrichtung 10 in einer Ausführungsform als Encoder oder Drehgeber, beispielsweise für den Einsatz in einem Motorfeedback-System. Die Gebervorrichtung 10 weist eine mit einer Welle 12 rotierende Codescheibe oder Maßverkörperung 14 auf, und auf der Maßverkörperung 14 befindet sich eine Codespur oder Maßspur 16 mit einer Absolutcodierung. Die einzelnen Codeelemente sind hier nicht gezeigt. In einem bevorzugten Binärcode sind zwei unterschiedliche Zustände der Codeelemente vorgesehen, ein mehrwertiger oder q-närer Code ist aber auch denkbar. Jeweils n gemeinsam erfasste Codeelemente ergeben ein Codewort, aus dem auf eine eindeutige Absolutposition geschlossen werden kann. Die Absolutcodierung kommt vorzugsweise mit nur einer Maßspur 16 aus.

Am Umfang der Maßverkörperung 14 beziehungsweise der Maßspur 16 ist eine Abtasteinrichtung 18 angeordnet, deren reihenförmig angeordnete Einzelempfangselemente alternierend in zwei Gruppen unterteilt sind und so zwei Empfänger 20a-b bilden, was in Figur 1 durch helle und dunkle Darstellung der Einzelempfangselemente symbolisiert ist. Aufgrund der alternierenden Anordnung sind die Einzelempfangselemente der beiden Empfänger 20a-b zueinander versetzt, und zwar vorzugsweise um eine halbe Ausdehnung der Codeelemente in Längs- oder Umfangsrichtung der Maßspur 16. In einer alternativen Ausführungsform ist jeder der Empfänger 20a-b als eigene Reihenanordnung von Einzelempfangselementen ausgeführt, so dass die Abtasteinrichtung 18 dann zwei parallele Reihenanordnungen aufweist, mit gegenseitigem Versatz um eine halbe Ausdehnung eines Codeelements. Auch mehr als zwei Empfänger in einer oder mehreren Reihenanordnungen sind denkbar.

In der beispielhaft gezeigten optischen Ausführungsform einer Gebervorrichtung 10 sind die Einzelempfangselemente beispielsweise als Fotodioden ausgebildet. Die Empfänger 20a-b sind vorzugsweise auf einem Opto-ASIC (Application-Specific Integrated Circuit) integriert und empfangen das Licht eines der Abtasteinrichtung 18 zugeordneten Lichtsenders 22, das durch die Maßspur 16 dringt. Die Einzelempfangselemente der Empfänger 20a-b erzeugen jeweils ein Abtastsignal, dessen Amplitude oder Pegel von dem Zustand des jeweiligen erfassten Codeelements abhängt.

Eine Steuer- und Auswertungseinheit 24 wertet die Abtastsignale der Einzelempfangselemente beider Empfänger 20a-b aus, um das momentan erfasste Codewort der Absolutcodierung der Maßspur 16 und damit die aktuelle Absolutposition der Maßverkörperung 14 zu bestimmen. Dabei wählt die Steuer- und Auswertungseinheit 24 jeweils denjenigen der Empfänger 20a-b aus, der momentan günstiger zu den Codeelementen der Maßspur 16 ausgerichtet ist und eindeutige Aussagen über das Codeelement erlaubt. Die Absolutposition wird aus den Abtastsignalen des günstiger ausgerichteten oder kurz günstigeren Empfängers 20a-b bestimmt. Was genau günstiger ausgerichtet bedeutet und wie die Steuer- und Auswertungseinheit 24 die Auswahl trifft, wird nachfolgend unter Bezugnahme auf die Figuren 2 bis 5 näher erläutert. Die Absolutposition oder daraus ermittelte Größen, etwa eine Geschwindigkeitsinformation nach Differenzierung, können an einem Ausgang bereitgestellt werden. Die klare Trennung von Abtasteinrichtung 18 und Steuer- und Auswertungseinheit 24 in Figur 1 dient nur der Erläuterung, die Funktionalität kann über gemeinsame oder zusätzliche Bausteine verteilt sein.

Optional weist die Gebervorrichtung 10 eine zusätzliche Synchronisationsmarkierung 26 insbesondere in Form einer Inkrementalspur und/oder einen zusätzlichen Synchronisationsempfänger 28 auf. Die Synchronisationsmarkierung 26 und/oder der Synchronisationsempfänger 28 ermöglichen eine Bestimmung der aktuellen Ausrichtung oder Phasenlage der Einzelempfangselemente der Empfänger 20a-b zu den Codeelementen. Damit kann die Auswahl des jeweils günstigeren Empfängers 20a-b alternativ, insbesondere vorübergehend, oder ergänzend zu der noch zu erläuternden erfindungsgemäßen Vorgehensweise auf dem herkömmlichen Wege erfolgen, der einleitend schon diskutiert wurde.

Die Darstellung der Gebervorrichtung 10 in Figur 1 ist sehr schematisch. Daher ist die gezeigte Ausgestaltung der Abtasteinrichtung 18 mit ihren Einzelempfangselementen der Empfänger 20a-b und dem zugehörigen Lichtsender 22 sehr einfach gehalten. Insbesondere in Bezug auf die Dimensionierungen und konkreten Positionen der Bauelemente kann die Gebervorrichtung 10 in der Praxis stark von Figur 1 abweichen, beispielsweise auch in einer Ausführungsform als Hohlwellendrehgeber. Alternativ zu einem transmissiven Aufbau ist auch ein reflexiver Aufbau denkbar, bei dem sich Abtasteinrichtung 18 und Lichtsender 22 auf derselben Seite der Maßverkörperung 14 befinden und die Maßspur 16 reflektierende Eigenschaften hat. Auch die Ausführung als optoelektronische Gebervorrichtung 10 ist beispielhaft, alternativ kann erfindungsgemäß eine magnetische, induktive oder kapazitive Gebervorrichtung 10 vorgesehen sein oder ein sonstiges geeignetes physikalisches Wirkprinzip zur Erfassung von Abtastsignalen eingesetzt werden. Bei einem magnetischen System beispielsweise wechseln einander statt transparenter und nicht transparenter Bereiche der Maßspur 16 Nordpole und Südpole ab, die von Hall-Sensoren oder dergleichen als Einzelempfangselemente der Empfänger 20a-b der Abtasteinrichtung 18 erfasst werden.

Die Gebervorrichtung 10 kann ferner statt als Drehgeber als Lineargeber oder Längsmesssystem ausgebildet sein. Die Maßverkörperung 14 ist dann nicht kreisförmig, sondern langgestreckt, die Maßspur entsprechend auf einer Geraden statt auf einem Kreis angeordnet, und statt einer Rotation erfolgt die Bewegung in Längsrichtung.

Figur 2 zeigt eine schematische Darstellung der jeweiligen Auswahl eines Empfängers 20a-b für eine aktuelle Bestimmung der Absolutposition. Die beiden Empfänger 20a-b sind nun als erster und zweiter Empfänger bezeichnet, wobei diese Begriffe vorerst keine besondere technische Bedeutung haben und austauschbar sind. Die oberste Zeile in Figur 2 ist dem ersten Empfänger, die zweite Zeile dem zweiten Empfänger zugeordnet. In der dritten Zeile wird einer der beiden Empfänger gewählt und in der letzten Zeile die getroffene Auswahl gezeigt. Auf der X-Achse ist die Position aufgetragen.

Durch Schraffur beziehungsweise weiße Fläche ist für ein jeweiliges Einzelempfangselement symbolisiert, ob es noch dasselbe Codeelement erfasst wie bei der vorhergehenden Bestimmung einer Absolutposition, was mit "stabil" bezeichnet ist, oder ob ein Übergang auf das nächste Codeelement stattgefunden hat, was mit "verändert" bezeichnet ist. Es wird nun ein negatives Auswahlkriterium angewandt: Ein Einzelempfangselement, das "verändert" ist und einen Übergang registriert hat, ist momentan nahe zu einer Kante zwischen zwei Codeelementen und damit ungünstig ausgerichtet, da es einen nicht scharf definierten Zwischenzustand ausliest. Folglich wird das entsprechende Einzelempfangselement des anderen Empfängers ausgewählt, das "stabil" und aufgrund des gegenseitigen Versatzes der beiden Empfänger 20a-b zumindest annähernd mittig zu einem Codeelement ausgerichtet ist.

Diese Auswahl ist durch die Pfeile in Figur 2 angedeutet. Je nach Position wird der jeweils günstiger ausgerichtete oder günstigere Empfänger 20a-b verwendet, d.h. das aus dessen Abtastsignalen gebildete Codewort wird der Bestimmung der Absolutposition zugrunde gelegt. Solange es keinen weiteren Übergang gibt, die Einzelempfangselemente des zuletzt ausgewählten Empfängers 20a-b also "stabil" sind, kann auch die Auswahl bestehen bleiben.

Es sei noch angemerkt, dass nicht jeder Übergang zwischen Codeelementen erkennbar ist, nämlich dort, wo mehrere gleiche Codeelemente aufeinanderfolgen. Nur wechselnde Codeelemente, anschaulich Hell-Dunkel-Übergänge oder Dunkel-Hell-Übergänge, führen zu einer Veränderung des Abtastsignals. Es gibt aber fast immer mindestens ein Einzelempfangselement, in dem ein solcher Übergang stattfindet. Ausnahme ist das sogenannte Nullwort oder Einswort nur aus Nullen oder nur aus Einsen, das aber sowieso von jedem Einzelempfangselement richtig erfasst wird. Eine Umschaltung erfolgt dann, sobald im Verlauf der weiteren Bewegung am Rand ein anderes Codeelement erscheint.

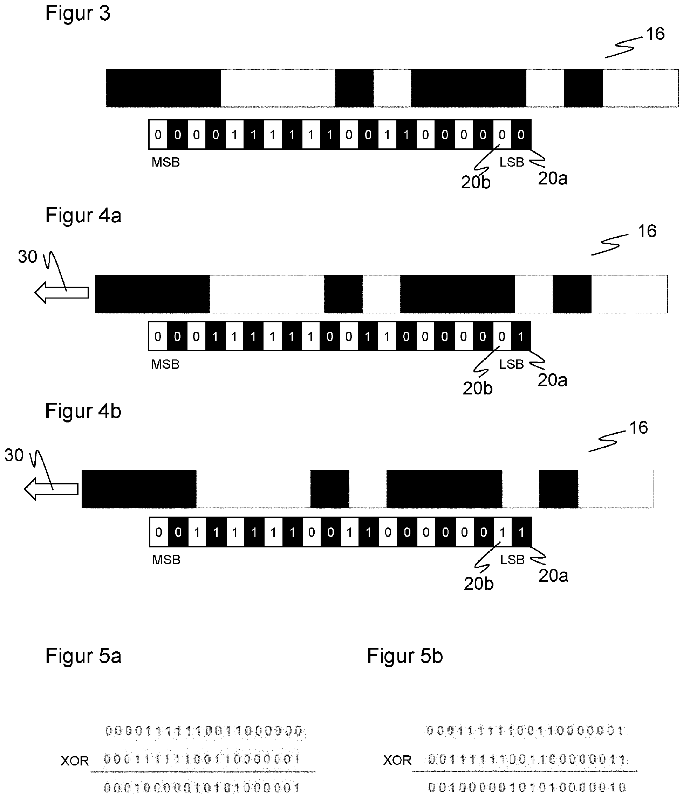

Figur 3 illustriert beispielhaft die Abtastung eines Absolutcodes der Maßspur 16 mit dunkeln und hellen Codeelementen. Es sei angemerkt, dass die hellen und dunklen Bereiche des Absolutcodes aus einem oder mehreren Codeelementen bestehen können. Unter dem Absolutcode sind die Einzelempfangselemente der beiden Empfänger 20a-b dargestellt. Ähnlich wie in Figur 1 sind die Empfänger 20a-b Gruppen alternierender Einzelempfangselemente derselben Reihenanordnung mit jeweils der halben Ausdehnung der Codeelemente. Alternativ bilden die Empfänger 20a-b zwei eigene, zueinander parallele Reihenanordnungen. Die Einzelempfangselemente des einen Empfängers 20a sind dunkel dargestellt, dieser Empfänger 20a wird aus Gründen, die später deutlich werden, als gerader Empfänger 20a bezeichnet. Dementsprechend wird der andere Empfänger 20b ungerader Empfänger 20b genannt, und dessen Einzelempfangselemente sind hell dargestellt.

In der Situation der Figur 3 fällt die Kante zwischen Codeelementen in den Erfassungsbereich der dunkel gezeigten Einzelempfangselemente des geraden Empfängers 20a. Dementsprechend ist der andere Empfänger, der ungerade Empfänger 20b mit den hell gezeigten Einzelempfangselementen für die aktuelle Bestimmung der Absolutposition günstiger und sollte ausgewählt werden.

Allerdings ist dies für die Steuer- und Auswertungseinheit 24 in einer Anfangsphase beim Initialisieren oder Einschalten nicht erkennbar. Es gibt noch keine vorhergehende Bestimmung der Absolutposition, mit der verglichen werden könnte. Das kann in einer Ausführungsform hingenommen werden, es wird dann versucht, mit einer beliebigen Auswahl eines Empfängers 20a-b eine Absolutposition zu bestimmen, bis dies gelingt und die Anfangsphase damit überwunden wird. Vorzugsweise erfolgt jedoch in der Anfangsphase die Auswahl anhand der Synchronisationsmarkierungen 26 beziehungsweise des Synchronisationsempfängers 28. Damit wird in aller Regel eine erste Bestimmung der Absolutposition ermöglicht, und ab dann kann die zu Figur 2 und sogleich nochmals in einem Beispiel zu den Figuren 4 bis 5 erläuterte erfindungsgemäße Auswahl übernehmen. Die einleitend geschilderten Probleme der herkömmlichen Synchronisation wirken sich vergleichsweise selten aus, und die problematische Phase ist ohnehin auf eine kurze Anfangsphase begrenzt, danach würde das erfindungsgemäße Vorgehen auch bei gescheiterter anfänglicher Synchronisation übernehmen können. Schließlich ist die Dauer der Anfangsphase umgekehrt proportional zur Bewegungsgeschwindigkeit. Da zumindest ein Teil der problematischen Toleranzen auf Latenzen beruht, die wiederum erst bei hohen Geschwindigkeiten stören, können die ungünstigen Faktoren nur einzeln auftreten und nicht kumulieren.

Figur 4a illustriert die Abtastung des Absolutcodes der Maßspur 16 gemäß Figur 3 zu einem späteren Zeitpunkt, in dem eine Relativbewegung in Richtung des Pfeils 30 eingesetzt hat. Die Anfangsphase ist beendet, die Bestimmung der Absolutposition ist danach autark und benötigt die Synchronisationsmarkierung 26 und den Synchronisationsempfänger 28 nicht mehr. Weiterhin sind die Einzelempfangselemente des geraden Empfängers 20a auf die Kanten zwischen Codeelementen ausgerichtet. Allerdings kann die Steuer- und Auswertungseinheit 24 dies im Unterschied zu der Situation gemäß Figur 3 nun erstmals ohne Rückgriff auf die Synchronisationsmarkierung 26 und den Synchronisationsempfänger 28.

Dafür werden die zuvor in Figur 3 erfassten Codeelemente mit den in Figur 4a erfassten Codeelementen verglichen. Der Vergleich und/oder die nachfolgende Auswertung geschieht vorzugsweise auf Ebene der Codeworte, die für die frühere Bestimmung der Absolutposition gespeichert und für die aktuelle Situation aus den Abtastsignalen erzeugt werden.

Ein besonders einfacher und effizienter Vergleich basiert auf einer logischen XOR-Verknüpfung. Dies ist für die Situation der Figur 4a in der Figur 5a illustriert. Das zu Figur 3 gelesene Codewort wird mit dem zu Figur 4a gelesenen Codewort XOR-verknüpft. Zu beachten ist, dass hier die Codeworte die doppelte Länge, d.h. je Codeelement einen doppelten Eintrag aufweisen. Davon ist das nur halb so breite Codewort zu unterscheiden, aus dem die Absolutposition bestimmt wird und zu dem nach der Auswahl nur die Einzelempfangselemente eines der beiden Empfänger 20a-b beitragen.

Im Ergebnis der XOR-Verknüpfung gemäß Figur 5a sind genau diejenigen Bits gesetzt, in denen sich etwas in dem aktuellen Codewort gemäß Figur 4a gegenüber dem zuletzt gelesenen Codewort gemäß Figur 3 verändert hat. Wenn man die Bits und damit die Einzelempfangselemente von rechts nach links von 0... n durchnummeriert, so sind das im gezeigten Beispiel die Bits 0, 6, 8, 10 und 16. Nach welchem dieser Bits sich die Steuer- und Auswertungseinheit 24 richtet, also beispielsweise dem tiefsten nullten Bit oder einem der anderen, ist letztlich beliebig, da alle diese Bits mit demselben Empfänger 20a aufgenommen wurden, nämlich dem geraden Empfänger 20a. Nun wird auch der Name verständlich, denn der gerade Empfänger 20a ist den geraden Zahlen der durchnummerierten Bits zugeordnet.

In der Situation der Figur 4a und 5a hat demnach unmittelbar aus dem Ergebnis der XOR-Verknüpfung erkennbar der gerade Empfänger 20a zuletzt eine Veränderung registriert. Deshalb wird der andere, der ungerade Empfänger 20b ausgewählt. In dieser speziellen Situation kurz nach der Anfangsphase war der ungerade Empfänger 20b ohnehin schon ausgewählt, nur dass dies zuvor ohne die Synchronisationsmarkierung 26 beziehungsweise den Synchronisationsempfänger 28 nicht feststellbar war.

Die Figuren 4b und 5b illustrieren die Situation analog zu den Figuren 4a und 5a nach weiterer Relativbewegung in Richtung des Pfeils 30 um etwa eine Ausdehnung eines Codeelements. Wie in Figur 5b illustriert, werden nun das gemäß Figur 4a zuvor erfasste Codewort und das gemäß Figur 4b aktuell erfasste Codewort miteinander XOR-verknüpft. Das Ergebnis zeigt eine Veränderung in den Bits 1, 7, 9, 11 und 17. Das sind ungerade Zahlen, so dass unmittelbar darauf geschlossen werden kann, dass nun der ungerade Empfänger 20b derjenige ist, der zuletzt eine Veränderung registriert hat. Dementsprechend wird nun der gerade Empfänger 20a ausgewählt.

Auf diese Weise wird in allen Positionen der jeweils ungünstig ausgerichtete der beiden Empfänger 20a-b anhand einer kürzest zurückliegenden Veränderung der erfassten Codeelemente erkannt und der andere Empfänger 20b-a als günstiger ausgerichtet ausgewählt. Die Einzelempfangselemente des günstigen Empfängers 20b-a erfassen keine Kante zwischen zwei Codeelementen, oder jedenfalls nur derart am Rand, dass dem erfassten Codeelement trotzdem noch ein eindeutiger Zustand zugewiesen werden kann. Die Bestimmung der Absolutposition basiert dann auf den Abtastsignalen oder den Codebits der Einzelempfangselemente des günstigen Empfänger 20b-a.

Sofern es in einem Messzyklus gar keine Veränderung gab, also sämtliche Einzelempfangselement dasselbe Codeelement erfassen wie zuvor beziehungsweise dasselbe Codebit liefern, wird die XOR-Verknüpfung in einer Abfolge ausschließlich von 0en liefern. In diesem Fall bleibt die bisherige Wahl des Empfängers 20a-b bestehen.

Wie oben beschrieben, ist es vorteilhaft, trotz des eigentlich autarken Verfahrens zusätzlich eine Synchronisationsmarkierung 26 beziehungsweise einen Synchronisationsempfänger 28 vorzusehen. Benötigt wird das allenfalls in der Anfangsphase, das erfindungsgemäße Vorgehen ist daher robust gegenüber den einleitend diskutierten Schwierigkeiten der herkömmlichen Synchronisation und nutzt die vorhandenen mechanischen und elektronischen Toleranzreserven voll aus. Denkbar ist auch, die Toleranzreserven zwischen den Abtastsignalen eines Empfängers 20a-b oder beider Empfänger 20a-b zu bestimmen.

Es ist zudem denkbar, die Synchronisationsmarkierung 26 beziehungsweise den Synchronisationsempfänger 28 für einen zweikanaligen Aufbau zu nutzen, beispielsweise um funktionale Sicherheit zu gewährleisten. Wenn dann die herkömmliche Synchronisierung fehlschlägt, so steht die erfindungsgemäße Bestimmung der Absolutposition immer noch zur Verfügung und umgekehrt. Weiterhin können die Ergebnisse aus beiden Kanälen verglichen werden, insbesondere um festzustellen, ob es Diskrepanzen gibt und deshalb womöglich funktionale Sicherheit derzeit nicht gewährleistet ist und beispielsweise eine Maschine oder ein Motor gebremst oder gestoppt werden muss, an der beziehungsweise dem die Gebervorrichtung montiert ist.

Die Erfindung wurde an einem Beispiel beschrieben, die aber auf viele der konkreten Merkmale nicht beschränkt. Schon zu Figur 1 erwähnt wurden unterschiedliche Aufbauten der Gebervorrichtung 10, unterschiedliche Erfassungsprinzipien wie optisch, magnetisch, kapazitiv oder induktiv sowie die Ausgestaltung als Drehgeber oder Lineargeber. Die Erfassung mit zwei Empfängern 20a-b ist besonders vorteilhaft, weil sie mit einer für die Erfindung minimalen Konfiguration auskommt. Dennoch können grundsätzlich auch mehr Empfänger eingesetzt werden, die zueinander insbesondere gleichmäßig versetzt sind, so dass für die Erfassung jedes Codeelements noch mehr Phasen zur Verfügung stehen. Durch Erkennen eines Übergangs kann einer dieser Empfänger als besonders ungünstig erkannt werden. Günstig ist demnach einer der anderen Empfänger, wobei noch ein Zeitstempel geführt werden kann, wann jeweils ein Empfänger zuletzt einen Übergang erkannt hat, und daran lässt sich eine Reihenfolge der Auswahl festmachen. Der Absolutcode ist in den Figuren als Binärcode mit zwei Zuständen hell und dunkel illustriert. Abweichend sind auch q-näre Absolutcodes mit q>2 Zuständen denkbar. Die XOR-Verknüpfung der bevorzugten vorgestellten Ausführungsform muss dann angepasst werden. Als Absolutcodes eignet sich ein Pseudozufallscode besonders, aber auch andere Codierungen wie ein Graycode sind vorstellbar. Die Länge der Codierung einer jeweiligen Absolutposition, also die Bitzahl der Codeworte einer Absolutposition, ist im Prinzip beliebig und kann entsprechend der gewünschten Auflösung gewählt werden, wobei vorzugweise auch die Zahl der Einzelempfangselemente je Empfänger 20a-b angepasst wird.

## Patentansprüche

1. Gebervorrichtung (10) zur Bestimmung einer Absolutposition eines ersten Objekts relativ zu einem zweiten Objekt, die eine mit dem ersten Objekt verbundene Maßverkörperung (14) mit einer Absolutcodespur (16) aus einer Vielzahl von Codeelementen, eine mit dem zweiten Objekt verbundene Abtasteinrichtung (18) mit mindestens einem ersten Empfänger (20a) und einem zweiten Empfänger (20b) zur mindestens doppelten Abtastung der Absolutcodespur (16), wobei die Empfänger (20a-b) längs der Absolutcodespur (16) um einen Bruchteil der Ausdehnung eines Codeelements zueinander versetzt angeordnet sind und jeweils eine Vielzahl von Einzelempfangselementen in einer Reihenanordnung längs der Absolutcodespur (16) zur Erzeugung von Abtastsignalen der Codeelemente umfassen, sowie eine Steuer- und Auswertungseinheit (24) aufweist, die dafür ausgebildet ist, für eine jeweilige Bestimmung einer Absolutposition den günstiger zu der Absolutcodespur (16) ausgerichteten Empfänger (20a-b) auszuwählen und aus den Abtastsignalen der Einzelempfangselemente des ausgewählten Empfängers (20a-b) ein Codewort zu rekonstruieren und damit die Absolutposition zu bestimmen,
**dadurch gekennzeichnet,**
**dass** die Steuer- und Auswertungseinheit (24) weiterhin dafür ausgebildet ist zu bestimmen, in welchem Empfänger (20a-b) ein Einzelempfangselement ein anderes Codeelement abtastet als bei einer vorhergehenden Bestimmung der Absolutposition und für die Bestimmung der aktuellen Absolutposition den anderen Empfänger (20b-a) auszuwählen.

2. Gebervorrichtung (10) nach Anspruch 1,
wobei die beiden Empfänger (20a-b) um eine halbe Ausdehnung eines Codeelements zueinander versetzt angeordnet sind.

3. Gebervorrichtung (10) nach Anspruch 1 oder 2,
die mindestens eine Synchronisationsmarkierung (26), insbesondere eine zusätzliche inkrementale Codierung, und/oder mindestens einen Synchronisationsempfänger (28) aufweist, mit deren Hilfe die Steuer- und Auswertungseinheit (24) den günstiger zu der Absolutcodespur (16) ausgerichtete Empfänger (20a-b) auswählen kann.

4. Gebervorrichtung (10) nach Anspruch 3,
wobei die Steuer- und Auswertungseinheit (24) dafür ausgebildet ist, den günstiger zu der Absolutcodespur (16) ausgerichteten Empfänger (20a-b) in einer Anfangsphase mit Hilfe der Synchronisationsmarkierung (26) und/oder des Synchronisationsempfängers (28) auszuwählen.

5. Gebervorrichtung (10) nach Anspruch 3 oder 4,
wobei die Steuer- und Auswertungseinheit (24) dafür ausgebildet ist, für eine zweikanalige Auswertung den günstiger zu der Absolutcodespur (16) ausgerichteten Empfänger (20a-b) zusätzlich mit Hilfe der Synchronisationsmarkierung (26) und/oder des Synchronisationsempfängers (28) auszuwählen.

6. Gebervorrichtung (10) nach einem der vorhergehenden Ansprüche,
wobei die Steuer- und Auswertungseinheit (24) dafür ausgebildet ist, die Feststellung, in welchem Empfänger (20a-b) ein Einzelempfangselement ein anderes Codeelement abtastet als bei einer vorhergehenden Bestimmung der Absolutposition, durch Vergleich der Codeworte der vorhergehenden und der aktuellen Bestimmung der Absolutposition zu treffen.

7. Gebervorrichtung (10) nach Anspruch 6,
wobei der Vergleich eine Exklusiv-Oder-Verknüpfung aufweist.

8. Gebervorrichtung (10) nach einem der vorhergehenden Ansprüche,
wobei der Empfänger (20a-b), der in einer Bewegungsrichtung (30) einer Bewegung zwischen erstem Objekt und zweitem Objekt vorne angeordnet ist, als ungerader Empfänger (20b) und der andere Empfänger als gerader Empfänger (20a) bezeichnet ist und die Einzelempfänger gemäß ihrer Lage in Bewegungsrichtung (30) von 0... n durchnummeriert sind, und wobei die Steuer- und Auswertungseinheit (24) dafür ausgebildet ist, den ungeraden Empfänger (20b) auszuwählen, wenn ein i-tes Einzelempfangselement, das ein anderes Codeelement abtastet als bei einer vorhergehenden Bestimmung der Absolutposition, eine gerade Nummer i trägt, und umgekehrt den geraden Empfänger (20a) auszuwählen, wenn das i-te Einzelempfangselement eine ungerade Nummer i trägt.

9. Gebervorrichtung (10) nach einem der vorhergehenden Ansprüche,
wobei die beiden Empfänger (20a-b) in einer einzigen alternierenden Reihenanordnung von Einzelempfangselementen zusammengefasst sind.

10. Gebervorrichtung (10) nach einem der vorhergehenden Ansprüche,
die als optische Gebervorrichtung ausgebildet ist, die einen Lichtsender (22) zum Anleuchten oder Durchleuchten der Absolutcodespur (16) aufweist, wobei die Absolutcodespur (16) reflektierende und nicht reflektierende oder lichtdurchlässige und nicht lichtdurchlässige Codeelemente umfasst und die Einzelempfangselemente als Photodioden ausgebildet sind.

11. Gebervorrichtung (10) nach einem der vorhergehenden Ansprüche,
wobei die Absolutcodespur (16) einen binären Absolutcode, einen Pseudozufallscode oder einen Graycode aufweist.

12. Verfahren zur Bestimmung einer Absolutposition eines ersten Objekts relativ zu einem zweiten Objekt, bei dem eine mit dem ersten Objekt verbundene Maßverkörperung (14) mit einer Absolutcodespur (16) aus einer Vielzahl von Codeelementen zur Erzeugung von Abtastsignalen von einer mit dem zweiten Objekt verbundene Abtasteinrichtung (18) mit mindestens einem ersten Empfänger (20a) und einem zweiten Empfänger (20b) mindestens doppelt abgetastet wird, wobei die Empfänger (20a-b) längs der Absolutcodespur (16) um einen Bruchteil der Ausdehnung eines Codeelements zueinander versetzt angeordnet sind und jeweils eine Vielzahl von Einzelempfangselementen in einer Reihenanordnung längs der Absolutcodespur (16) umfassen, wobei für eine jeweilige Bestimmung einer Absolutposition der günstiger zu der Absolutcodespur (16) ausgerichtete Empfänger (20a-b) ausgewählt und aus den Abtastsignalen der Einzelempfangselemente des ausgewählten Empfängers ein Codewort rekonstruiert und damit die Absolutposition bestimmt wird,
**dadurch gekennzeichnet,**
**dass** bestimmt wird, in welchem Empfänger (20a-b) ein Einzelempfangselement ein anderes Codeelement abtastet als bei einer vorhergehenden Bestimmung der Absolutposition und für die Bestimmung der aktuellen Absolutposition der andere Empfänger (20b-a) ausgewählt wird.

## Claims

1. An encoder device (10) for determining an absolute position of a first object relative to a second object, comprising a dimensional scale (14) connected to the first object and having an absolute code track (16) of a plurality of code elements, a scanning device (18) connected to the second object and having at least a first receiver (20a) and a second receiver (20b) for at least twice scanning the absolute code track (16), wherein the receivers (20a-b) are arranged offset from one another along the absolute code track (16) by a fraction of the extent of a code element and each comprise a plurality of individual receiving elements in a row arrangement along the absolute code track (16) for generating scanning signals of the code elements, and a control and evaluation unit (24) configured to select, for a respective determination of an absolute position, the receiver (20a-b) which is aligned more favorably with respect to the absolute code track (16), and to reconstruct a code word from the scanning signals of the individual receiver elements of the selected receiver (20a-b) and thus to determine the absolute position,
**characterized in that** the control and evaluation unit (24) is further configured to determine in which receiver (20a-b) an individual receiving element scans a different code element than in a previous determination of the absolute position and to select the other receiver (20b-a) for the determination of the current absolute position.

2. The encoder device (10) according to claim 1,
wherein the two receivers (20a-b) are arranged offset from each other by half an extension of a code element.

3. The encoder device (10) according to claim 1 or 2,
comprising at least one synchronization marking (26), in particular an additional incremental coding, and/or at least one synchronization receiver (28), usable by the control and evaluation unit (24) to select the receiver (20a-b) aligned more favorably with respect to the absolute code track (16).

4. The encoder device (10) according to claim 3,
wherein the control and evaluation unit (24) is configured to select the receiver (20a-b) aligned more favorably to the absolute code track (16) in an initial phase using the synchronization marker (26) and/or the synchronization receiver (28).

5. The encoder device (10) according to claim 3 or 4,
wherein the control and evaluation unit (24) is configured for additionally selecting, for a two-channel evaluation, the receiver (20a-b) aligned more favorably with respect to the absolute code track (16) using the synchronization marker (26) and/or the synchronization receiver (28).

6. The encoder device (10) according to any of the preceding claims,
wherein the control and evaluation unit (24) is configured to make the determination in which receiver (20a-b) an individual receiving element scans a different code element than in a previous determination of the absolute position by comparing the code words of the previous and the current determination of the absolute position.

7. The encoder device (10) according to claim 6,
wherein the comparison comprises an exclusive-or operation.

8. The encoder device (10) according to any of the preceding claims,
wherein the receiver (20a-b) disposed in a movement direction of movement (30) between the first object and the second object is designated as an odd receiver (20b) and the other receiver is designated as an even receiver (20a), and the individual receivers are numbered according to their position in the direction of movement (30) from 0....n according to their position in the direction of movement (30), and wherein the control and evaluation unit (24) is configured to select the odd receiver (20b) when an i-th individual receiving element scanning a code element other than in a previous determination of the absolute position bears an even number i, and conversely to select the even receiver (20a) when the i-th individual receiving element bears an odd number i.

9. The encoder device (10) according to any of the preceding claims,
wherein the two receivers (20a-b) are combined into a single alternating row arrangement of individual receiving elements.

10. The encoder device (10) according to any of the preceding claims,
configured as an optical encoder device having a light transmitter (22) for illuminating or transilluminating the absolute code track (16), the absolute code track (16) comprising reflective and non-reflective or light-transmissive and non-light-transmissive code elements, and the individual receiving elements being configured as photodiodes.

11. The encoder device (10) according to any of the preceding claims,
wherein the absolute code track (16) comprises a binary absolute code, a pseudo-random code, or a gray code.

12. A method of determining an absolute position of a first object relative to a second object, wherein a dimensional scale (14) connected to the first object and having an absolute code track (16) comprising a plurality of code elements for generating scanning signals is scanned at least twice by a scanning device (18) connected to the second object and having at least a first receiver (20a) and a second receiver (20b), wherein the receivers (20a-b) are arranged offset from each other along the absolute code track (16) by a fraction of the extent of a code element and each comprise a plurality of individual receiving elements in a row arrangement along the absolute code track (16), wherein for a respective determination of an absolute position the receiver (20a-b) aligned more favorably with respect to the absolute code track (16) is selected and a code word is reconstructed from the scanning signals of the individual receiving elements of the selected receiver and thus the absolute position is determined,
**characterized in that** it is determined in which receiver (20a-b) an individual receiving element scans a different code element than in a preceding determination of the absolute position and the other receiver (20b-a) is selected for the determination of the current absolute position.

## Revendications

1. Dispositif de codage (10) pour déterminer une position absolue d'un premier objet par rapport à un deuxième objet, comprenant une mesure matérialisée (14) reliée au premier objet avec une piste de code absolu (16) d'une pluralité d'éléments de code, un dispositif de balayage (18) relié au deuxième objet avec au moins un premier récepteur (20a) et un deuxième récepteur (20b) pour le balayage au moins double de la piste de code absolu (16), dans lequel les récepteurs (20a- b) sont décalés l'un par rapport à l'autre le long de la piste de code absolu (16) d'une fraction de l'étendue d'un élément de code et comprennent chacun une pluralité d'éléments de réception individuels disposés en rangée le long de la piste de code absolu (16) pour générer des signaux de balayage des éléments de code, ainsi qu'une unité de commande et d'évaluation (24) configurée pour sélectionner, pour une détermination respective d'une position absolue, le récepteur (20a- b) aligné plus favorablement par rapport à la piste de code absolu (16), et pour reconstruire un mot de code à partir des signaux de balayage des éléments de réception individuels du récepteur sélectionné (20a- b) et pour déterminer ainsi la position absolue,
**caractérisé en ce que** l'unité de commande et d'évaluation (24) est en outre configurée pour déterminer dans quel récepteur (20a- b) un élément de réception individuel balaie un autre élément de code que lors d'une détermination précédente de la position absolue et pour sélectionner l'autre récepteur (20b- a) pour la détermination de la position absolue actuelle.

2. Dispositif de codage (10) selon la revendication 1,
dans lequel les deux récepteurs (20a- b) sont décalés l'un par rapport à l'autre d'une demi-extension d'un élément de code.

3. Dispositif de codage (10) selon la revendication 1 ou 2,
comprenant au moins un marquage de synchronisation (26), en particulier un codage incrémental supplémentaire, et/ou au moins un récepteur de synchronisation (28), à l'aide duquel l'unité de commande et d'évaluation (24) peut sélectionner le récepteur (20a- b) aligné plus favorablement par rapport à la piste de code absolu (16).

4. Dispositif de codage (10) selon la revendication 3,
dans lequel l'unité de commande et d'évaluation (24) est configurée pour sélectionner le récepteur (20a- b) aligné plus favorablement par rapport à la piste de code absolu (16) dans une phase initiale à l'aide du marqueur de synchronisation (26) et/ou du récepteur de synchronisation (28).

5. Dispositif de codage (10) selon la revendication 3 ou 4,
dans lequel l'unité de commande et d'évaluation (24) est configurée pour sélectionner en outre, pour une évaluation à deux canaux, le récepteur (20a- b) aligné plus favorablement par rapport à la piste de code absolu (16) à l'aide du marqueur de synchronisation (26) et/ou du récepteur de synchronisation (28).

6. Dispositif de codage (10) selon l'une des revendications précédentes,
dans lequel l'unité de commande et d'évaluation (24) est configurée pour déterminer dans quel récepteur (20a- b) un élément de réception individuel balaie un autre élément de code différent que lors d'une détermination précédente de la position absolue en comparant les mots de code de la détermination précédente et de la détermination actuelle de la position absolue.

7. Dispositif de codage (10) selon la revendication 6,
dans lequel la comparaison comprend un lien OU exclusif.

8. Dispositif de codage (10) selon l'une des revendications précédentes,
dans lequel le récepteur (20a- b) situé à l'avant dans une direction de mouvement (30) entre le premier objet et le deuxième objet est désigné comme récepteur impair (20b) et l'autre récepteur comme récepteur pair (20a), et les récepteurs individuels sont numérotés de 0... à n en fonction de leur position dans la direction de mouvement (30), et dans lequel l'unité de commande et d'évaluation (24) est configurée pour sélectionner le récepteur impair (20b) lorsqu'un i-ème élément de réception individuel qui balaye un autre élément de code que dans une détermination précédente de la position absolue porte un nombre pair i, et inversement pour sélectionner le récepteur pair (20a) lorsque le i-ème élément de réception individuel porte un nombre impair i.

9. Dispositif de codage (10) selon l'une des revendications précédentes,
dans lequel les deux récepteurs (20a- b) sont combinés en une seule rangée alternée d'éléments de réception individuels.

10. Dispositif de codage (10) selon l'une des revendications précédentes,
qui est configuré comme un dispositif de codage optique comprenant un émetteur de lumière (22) pour éclairer ou illuminer la piste de code absolu (16), dans lequel la piste de code absolu (16) comprend des éléments de code réfléchissants et non réfléchissants ou translucides et non translucides, et les éléments de réception individuels sont configurés comme des photodiodes.

11. Dispositif de codage (10) selon l'une des revendications précédentes,
dans lequel la piste de code absolu (16) comprend un code absolu binaire, un code pseudo-aléatoire ou un code Gray.

12. Procédé pour déterminer une position absolue d'un premier objet par rapport à un deuxième objet, dans lequel une mesure matérialisée (14) reliée au premier objet avec une piste de code absolu (16) constituée d'une pluralité d'éléments de code pour générer des signaux de balayage est balayée au moins doublement par un dispositif de balayage (18) relié au deuxième objet et comportant au moins un premier récepteur (20a) et un deuxième récepteur (20b), dans lequel les récepteurs (20a- b) sont décalés l'un par rapport à l'autre le long de la piste de code absolu (16) d'une fraction de l'étendue d'un élément de code et comprennent chacun une pluralité d'éléments de réception individuels disposés en rangée le long de la piste de code absolu (16), dans lequel, pour une détermination respective d'une position absolue, le récepteur (20a- b) aligné plus favorablement par rapport à la piste de code absolu (16) est sélectionné et un mot de code est reconstruit à partir des signaux de balayage des éléments de réception individuels du récepteur sélectionné et ainsi la position absolue est déterminée,
**caractérisé en ce qu'**il est déterminé dans quel récepteur (20a- b) un élément de réception individuel balaie un autre élément de code que lors d'une détermination précédente de la position absolue et l'autre récepteur (20b- a) est sélectionné pour la détermination de la position absolue actuelle.
